# EUROPÄISCHE PATENTANMELDUNG

(11) **EP 2 662 962 A2**
(43) Veröffentlichungstag der Anmeldung: **13.11.2013**
(21) Anmeldenummer: 13167287.5
(22) Anmeldetag: 10.05.2013
(51) Int. Cl.: H02K 41/03, H02K 1/14

(54) **Nach dem Longitudinalflussprinzip ausgebildeter Linearmotor**

(30) Priorität: 11.05.2012 DE 102012009268
(71) Anmelder: Waltec Maschinen GmbH, 96352 Wilhelmsthal-Steinberg (DE)
(72) Erfinder: Bassing, Werner, 96364 Marktrodach (DE)
(74) Vertreter: Köhler, Walter

(57) **Zusammenfassung**

Es wird ein elektrischer Longitudinalfluss-Linearmotor (1) mit einem Stator (2) und einem Läufer (3) mit Permanentmagneten (31) beschrieben, wobei der Stator (2) elektrisch beaufschlagbare Statorwicklungen (22) aufweist, die eine Läuferachse (32) des Läufers (3) umgreifen, wobei der magnetische Fluss in Ebenen parallel zur Läuferachse (32) ausgebildet ist. Der Stator (2) ist aus elektrisch voneinander isolierten Statorblechen (21 sb) aufgebaut, die parallel und radial zur Läuferachse (32) angeordnet sind und ein Statorelement (21) oder mehrere längs der Läuferachse angeordnete Statorelemente (21) bilden.

## Beschreibung

Die Erfindung betrifft einen elektrischen Linearmotor, der nach dem Longitudinalflussprinzip ausgebildet ist.

Bei Longitudinalfluss-Linearmotoren weist der magnetische Fluss längs zur Bewegungsrichtung. Durch Überlagerung der Magnetfelder der einzelnen Wicklungsstränge wird mit dem magnetischen Rückschluss ein Wanderfeld erzeugt. Der Longitudinalfluss-Linearmotor funktioniert also wie eine normale Drehfeldmaschine.

Im Unterschied dazu ist die Magnetflussführung von Transversalfluss-Linearmotoren quer zur Bewegungsrichtung. Hieraus leitet sich auch deren typische Querschnittsausbildung mit ausgeprägten Polen und Pollücken mit unterschiedlich großem Luftspalt ab. Zur Entwicklung einer Kraft bei einer definierten Bewegungsrichtung benötigen die Transversalfluss-Linearmotoren mindestens zwei versetzt angeordnete Systeme bzw. Einzelmotore. In jedem Einzelmotor werden magnetische Wechselfelder erregt und nur durch die Überlagerung der Wechselfelder der Einzelmotore wird eine kontinuierliche Bewegung erreicht.

Bisher wird das Statoreisen eines elektrischen Longitudinalfluss-Linearmotors aus Vollmaterial ausgeführt, das Wirbelstromverluste verursacht. Die Wirbelstromverluste sind in der 2. Potenz von der Frequenz des Erregerstroms abhängig. Eine Absenkung der Frequenz auf niedrige Werte, beispielsweise 16 Hz, reduziert die Wirbelstromverluste nicht in dem gewünschten Maße, weshalb ein hoher Energieaufwand für die Statorkühlung anfällt.

Aufgabe der vorliegenden Erfindung ist es, einen elektrischen Longitudinalfluss-Linearmotor anzugeben, der einen geringeren Energieaufwand für die Statorkühlung erfordert.

Erfindungsgemäß wird diese Aufgabe mit dem Gegenstand des Anspruchs 1 gelöst. Es wird ein elektrischer Longitudinalfluss-Linearmotor mit einem Stator und einem Läufer mit Permanentmagneten vorgeschlagen, wobei der Stator elektrisch beaufschlagbare Statorwicklungen aufweist, die eine Läuferachse des Läufers umgreifen, wobei der magnetische Fluss in Ebenen parallel zur Läuferachse ausgebildet ist, mit einem Außengehäuse, in dem ein Gehäuse angeordnet ist, wobei der Stator aus elektrisch voneinander isolierten Statorblechen aufgebaut ist, die mit einander zugewandten Flächen in Ebenen angeordnet sind, die durch die Läuferachse und einen Radialvektor aufgespannt sind und ein Statorelement oder mehrere längs der Läuferachse angeordnete Statorelemente bilden,
wobei das Statorelement aus mehreren längs der Läuferachse angeordneten und spiegelbildlich zueinander ausgebildeten Statorsegmentelementen ausgebildet ist,
wobei die Statorbleche an ihrer dem Läufer abgewandten Außenkante von dem aus Vollmaterial ausgebildeten Gehäuse umgriffen sind, das aus mehreren längs und/oder parallel der Läuferachse angeordneten Gehäusesegmenten ausgebildet ist.

Der vorgeschlagene Longitudinalfluss-Linearmotor weist den Vorteil auf, dass die Wirbelstromverluste durch den geblechten Aufbau entscheidend reduziert werden und dass trotz des geblechten Aufbaus eine einfache Montage bei zugleich stabiler Ausbildung erreicht ist.

Dadurch, dass übereinander angeordnete Statorelementsegmente spiegelbildlich zueinander ausgebildet sind, ergibt sich ein besonders montagefreundlicher Aufbau.

Es kann vorgesehen sein, dass die Statorelemente Aufnahmeräume für die Statorwicklungen aufweisen. Die Aufnahmeräume können beispielsweise so angeordnet sein, dass jeweils ein halber Aufnahmeraum in zwei axial benachbarten Statorelementsegmenten ausgebildet ist, so dass die Statorwicklungen bei der Montage des Stators in einen zunächst offenen Aufnahmeraum einlegbar sind, der beim Auflegen eines weiteren Statorelements verschlossen wird, wie weiter oben beschrieben.

Die Aufnahmeräume können als ringförmige Aufnahmeräume ausgebildet sein.

Es kann vorgesehen sein, dass die Statorbleche an ihrer dem Läufer abgewandten Außenkante formschlüssig mit dem Gehäuse verbunden sind. Die Verbindung kann unmittelbar oder mittelbar vorgesehen sein. Zur Ausbildung einer mittelbaren Verbindung können beispielsweise Befestigungsschrauben vorgesehen sein, die das Gehäuse durchgreifen und in ein Gewindesackloch eines Statorelementsegments eingreifen.

Es kann vorgesehen sein, dass das Gehäusesegment an seiner Innenfläche eine im Querschnitt schwalbenschwanzförmige Feder aufweist, die in eine an der Außenfläche des Statorelements ausgebildete schwalbenschwanzförmige Nut eingreift oder umgekehrt.

Der Aufbau des Linearmotors kann beispielsweise folgende Schritte umfassen:
a) Einlegen eines unteren ringförmigen Abstandshalters in ein Motoraußengehäuse.
b) Auflegen von aus Statorblechen vorgefertigten Statorelementsegmenten mit der der Schwalbenschwanzführungsfläche zugewandten Stirnfläche auf den Abstandshalter, bis das Statorelement geschlossen ist.
c) Auflegen eines Gehäusesegments auf das Statorelement. Damit sind die Statorelementsegmente an dem Gehäusesegment formschlüssig fixiert.
d) Einlegen einer Statorwicklung in obere Ausnehmungen der Statorelementsegmente.
e) Einlegen weiterer spiegelbildlicher Statorelementsegmente in das Gehäusesegment, bis das Statorelement geschlossen ist.
f) Einlegen einer weiteren Statorwicklung in obere Ausnehmungen der Statorelementsegmente.

Nun werden die Montageschritte b) bis f) solange wiederholt, bis der Stator vollständig montiert ist. Nach dem Einlegen der letzten Statorelementsegmente entfällt der Montageschritt f).
g) Einlegen eines oberen ringförmigen Abstandshalters in das Motorgehäuse.
Bei einer Motorreparatur, beispielsweise zum Auswechseln einer defekten Wicklung, können die Schritte in umgekehrter Reihenfolge durchgeführt werden.

In einer weiteren vorteilhaften Ausbildung kann vorgesehen sein, dass die Statorbleche an ihrer dem Läufer abgewandten Außenkante stoffschlüssig mit dem Gehäuse verbunden sind.

Die Statorbleche können an ihrer dem Läufer abgewandten Außenkante stoffschlüssig miteinander verbunden sein.

Es kann vorgesehen sein, dass die Statorbleche im radialen Querschnitt keilförmig ausgebildet sind. Die keilförmige Ausbildung ist besonders vorteilhaft, wenn relativ dicke Statorbleche ein Statorelement mit relativ kleinem Durchmesser bilden.

Statorbleche mit konstanter Dicke können in einem radialen Endabschnitt Oberflächenerhebungen aufweisen und ein Statorblech bilden, an dessen Oberfläche keilförmig zulaufende Tangenten anlegbar sind. Solche Statorbleche sind ebenso gut montierbar wie Statorbleche mit keilförmigem Querschnitt.

In einer alternativen Ausbildung können Statorbleche mit konstanter Dicke eine keilförmige Oberflächenbeschichtung aufweisen.

Es kann vorgesehen sein, dass die Statorbleche kraftschlüssig miteinander verbunden sind, wobei die Statorbleche unter Presssitz an der Innenseite des Gehäuses anliegen. Dadurch ergibt sich ein Aufbau nach dem Prinzip eines aus Dauben und Fassreifen aufgebauten Fasses oder eines Gewölbes, wobei die radial verlaufenden keilförmigen Statorbleche die Dauben bilden und die zwei durch Spannschrauben zusammengepressten Gehäusesegmente die Fassreifen bilden.

Weiter kann vorgesehen sein, dass die Statorbleche aus Elektroblech ausgebildet sind. Elektroblech ist ein kalt gewalztes Band aus Eisen-Silizium-Legierungen, das zur Herstellung von magnetischen Kreisen für elektrische Maschinen verwendet wird. Es handelt sich um einen weichmagnetischen Werkstoff.

Auch das Gehäuse kann aus einem weichmagnetischen Werkstoff ausgebildet sein.

Die Erfindung wird nun anhand von Ausführungsbeispielen näher erläutert. Es zeigen
- Fig. 1: ein erstes Ausführungsbeispiel eines erfindungsgemäßen Longitudinalfluss-Linearmotors in einer schematischen Schnittdarstellung;
- Fig. 2: eine schematische Schnittansicht des Linearmotors in Fig. 1 längs der Schnittlinie II-II;
- Fig. 3: eine Teilansicht des Linearmotors in Fig. 1 in perspektivischer Darstellung;
- Fig. 4a: eine erstes Ausführungsbeispiel von Statorblechen in einer schematischen Schnittdarstellung;
- Fig. 4b: eine zweites Ausführungsbeispiel von Statorblechen in einer schematischen Schnittdarstellung;
- Fig. 4c: eine drittes Ausführungsbeispiel von Statorblechen in einer schematischen Schnittdarstellung;
- Fig. 5: ein zweites Ausführungsbeispiel eines erfindungsgemäßen Longitudinalfluss-Linearmotors in einer schematischen Schnittdarstellung;
- Fig. 6: ein drittes Ausführungsbeispiel eines erfindungsgemäßen Longitudinalfluss-Linearmotors in einer schematischen Schnittdarstellung;
- Fig. 7: ein viertes Ausführungsbeispiel eines erfindungsgemäßen Longitudinalfluss-Linearmotors in einer schematischen Schnittdarstellung;
- Fig. 8: eine schematische Schnittansicht des Linearmotors in Fig. 7 längs der Schnittlinie VIII-VIII.

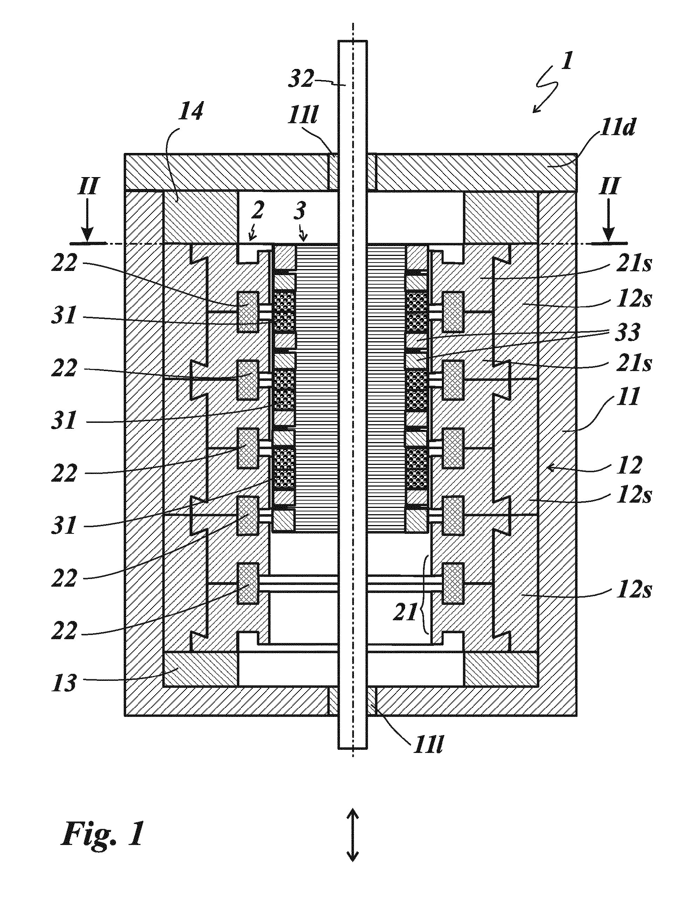

Die Fig. 1 bis 3 zeigen einen Longitudinalfluss-Linearmotor 1 mit einem Stator 2 und einem in dem Stator 2 linear beweglichen Läufer 3. Der Stator 2 weist elektrisch beaufschlagbare Statorwicklungen 22 auf, die die Bewegungsachse des Läufers 3 umgreifen, wobei der magnetische Fluss in Ebenen parallel zur Bewegungsachse des Läufers 3 ausgebildet ist. Die Statorwicklungen 22 sind übereinander angeordnet und können beispielsweise mit einem Dreiphasennetz verbunden sein, so dass die Statorwicklungen 22 ein magnetisches Wanderfeld ausbilden, das den Läufer 3 mitnimmt. Der Läufer 3 weist Ebenen von übereinander angeordneten Permanentmagneten 31 auf, deren Polarität je Ebene wechselt. Die Magnet-Ebenen können aus aneinander gereihten Einzelmagneten oder aus Magnet-Ronden oder aus Ronden-Segmenten bestehen. Die Magnet-Ronden können eine radiale Magnetisierung aufweisen. Die Magnet-Ronden können auch eine je Ebene wechselnde axiale Magnetisierung aufweisen, wobei der magnetische Fluss durch Flussleitelemente 33 von axialer in radialer Richtung umgelenkt wird oder umgekehrt. Die Flussleitelemente 33 sind durch Isolierzwischenlagen voneinander getrennt.

Der Läufer 3 weist eine Läuferachse 32 auf, die in dem dargestellten Fall in Gleitlagern 11l geführt ist, die im Boden des Gehäuses 11 bzw. in der Deckplatte 11 d angeordnet sind.

Der Linearmotor weist in dem dargestellten Ausführungsbeispiel beispielhaft ein topfförmiges Außengehäuse 11 auf, dessen offene Stirnseite mit einer Deckplatte 11d überdeckt ist. Das Außengehäuse 11 bildet einen Aufnahmeraum für die Komponenten des Linearmotors 1, die in das Außengehäuse 11 eingefüllt werden.

In dem Außengehäuse 11 ist ein Gehäuse 12 angeordnet, das aus mehreren übereinander angeordneten Gehäusesegmenten 12s gebildet ist. Die Außenwand des Gehäuses 12 liegt an der Innenwand des Außengehäuses 11 an.

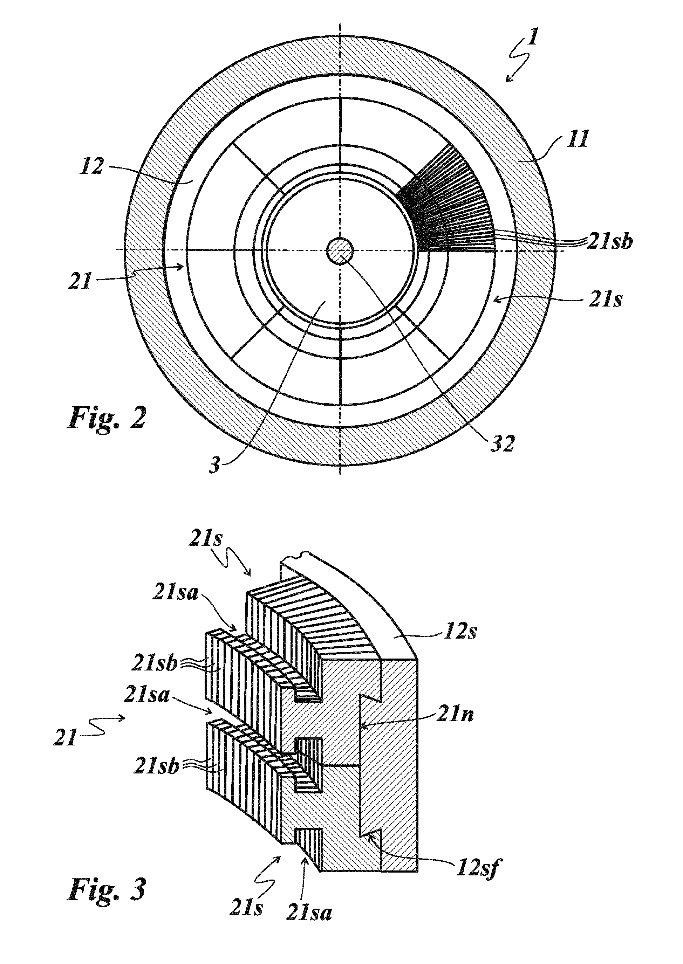

In dem Gehäuse 12 ist der Stator 2 angeordnet, der aus übereinander angeordneten Statorelementen 21 ausgebildet ist. Jeder der Statorelemente 21 ist aus nebeneinander und übereinander angeordneten und spiegelbildlich ausgebildeten Statorelementsegmenten 21 s ausgebildet. Wie Fig. 2 zeigt, sind die Statorelementsegmente 21 s in der Draufsicht keilförmig so ausgebildet, dass sie zu dem Statorelement 21 zusammensetzbar sind. In dem in Fig. 2 dargestellten Ausführungsbeispiel bilden 2x8 Statorelementsegmente 21 s das Statorelement 21.

Die die Statorelemente 21 bildenden Statorelementsegmente 21 s sind mit dem Gehäuse 12 über eine Schwalbenschwanzverbindung formschlüssig verbunden. Wie Fig. 3 zeigt, weist das Gehäusesegment 12s an seiner Innenfläche eine im Querschnitt schwalbenschwanzförmige Feder 12sf auf, die in eine an der Außenfläche des Statorelementsegments 21 s ausgebildete schwalbenschwanzförmige Nut 21 n eingreift. Um eine Überbestimmung bei der Ausbildung der Schwalbenschwanzverbindung zu vermeiden, kann zwischen den beiden Statorelementsegmenten 21 s ein Spalt ausgebildet sein, so dass die Länge der Nut 21 n immer exakt der Länge der Feder 12sf entspricht und Feder 12sf und Nut 21 n ohne Spiel ineinander greifen.

Die Statorelementsegmente 21 s weisen Ausnehmungen 21 sa auf, in die Statorwicklungen 22 eingebracht sind. Dabei bilden jeweils die benachbarten Ausnehmungen 21 sa zweier einander zugewandter Statorelementsegmente 21s einen Aufnahmeraum für eine Statorwicklung 22. Wie in Fig. 3 zu sehen, weist jedes Statorelement 21 vier Ausnehmungen 21 sa auf, die in Verbindung mit einem benachbarten Statorelement 21 zwei Statorwicklungen 22 aufnehmen, die übereinander angeordnet sind.

Die Statorelementsegmente 21 s sind aus voneinander isolierten Statorblechen 21 sb aus einem weichmagnetischen Material, wie beispielsweise Dynamoblech, aufgebaut, wie in Fig. 3 zu erkennen ist. Die Statorbleche 21 sb sind radial angeordnet und können keilförmig ausgebildet sein, um die unterschiedliche Bogenlänge am äußeren und am inneren Umfang des Statorelementsegments auszugleichen. Die Statorbleche 21 sb bilden im montierten Zustand einen Blechstapel, der beispielsweise durch einen thermoplastischen Isolierlack zusammengehalten ist. Da jedes der Statorbleche 21 sb formschlüssig mit dem Gehäuse 12 verbunden ist, sind zusätzliche Befestigungselemente, wie zum

Beispiel Befestigungsschrauben, entbehrlich.

Zur axialen Fixierung des Stators 2 in dem Außengehäuse 11 sind ein unterer ringförmiger Abstandshalter 13 und ein oberer ringförmiger Abstandshalter 14 vorgesehen, die an der Innenwand des Außengehäuses 11 anliegen und den Stator 2 in seiner axialen Lage fixieren.

Zur Montage des Linearmotors 1 werden folgende Montageschritte ausgeführt:
a) Einlegen des unteren Abstandshalters 13 in das Außengehäuse 11.
b) Auflegen von Statorelementsegmenten 21 s mit der der Schwalbenschwanzführungsfläche zugewandten Stirnfläche auf den Abstandshalter 13, bis der Ring geschlossen ist. In dem in Fig. 2 dargestellten Ausführungsbeispiel werden acht Statorelementsegmente 21 s auf den Abstandshalter 13 aufgelegt, die die Läuferachse 32 umgeben.
c) Auflegen eines Gehäusesegments 12s auf die zum Ring geschlossenen Statorelementsegmente 21 s. Damit sind die Statorelementsegmente 21 s an dem Gehäusesegment 12s formschlüssig fixiert.
d) Einlegen einer Statorwicklung 22 in die oberen Ausnehmungen der Statorelementsegmente 21 s.
e) Spiegelbildliches Einlegen weiterer Statorelementsegmente 21 s in das Gehäusesegment 12s, bis der Ring geschlossen ist.
f) Einlegen einer weiteren Statorwicklung 22 in die oberen Ausnehmungen der Statorelementsegmente 21 s.
Nun werden die Montageschritte b) bis f) solange wiederholt, bis der Stator 2 vollständig montiert ist. Nach dem Einlegen der letzten Statorelementsegmente entfällt der Montageschritt f).
g) Einlegen des oberen Abstandshalters 13 in das Außengehäuse 11.

Es ergibt sich so ein einfacher, montagefreundlicher und stabiler Aufbau des Stators 2. Die starken axialen Kräfte, die von den Permanentmagneten des Läufers 3 ausgehen, werden durch den Gehäuse 12 aufgenommen, der aus einem hochfesten Material ausgebildet sein kann.

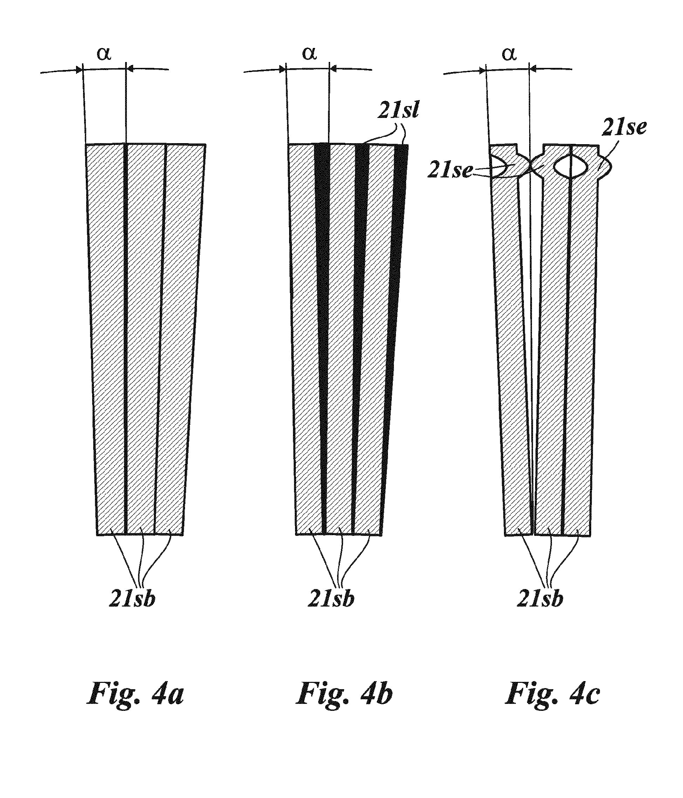

Die Fig. 4a bis 4c zeigen drei Ausführungsbeispiele zur Ausbildung eines keilförmigen radialen Querschnittsprofils der Statorbleche 21 sb. Wie Fig. 2 zeigt, müssen die Statorbleche 21 sb ein keilförmiges radiales Querschnittsprofil aufweisen, wenn sie einen ringförmigen Stator bilden sollen, dessen innerer Durchmesser stets kleiner ist als der äußere Durchmesser. Das gilt nicht nur für den Sonderfall eines kreisringförmigen Stators, sondern auch für Statoren mit anderer Querschnittsausbildung, beispielsweise mit elliptischer oder auch rechteckförmiger Querschnittsausbildung. Der in Fig. 4a bis Fig. 4c mit α bezeichnete Keilwinkel kann in der Größenordnung von Zehntelgrad liegen, beispielsweise 0,3° betragen.

Fig. 4a zeigt ein Ausführungsbeispiel, bei dem das Statorblech keilförmig ausgebildet ist. Das Statorblech 21 b kann phosphatiert sein und so mit einer elektrisch isolierenden Oberfläche ausgebildet sein. Es kann aber auch mit einem Thermolack gleichmäßiger Schichtdicke oder dergleichen beschichtet sein.

Fig. 4b zeigt ein zweites Ausführungsbeispiel, bei dem ein Statorblech 21 b konstanter Dicke eine keilförmige Beschichtung aufweist, beispielsweise aus einem Thermolack. Bei dem in Fig. 4b dargestellten Ausführungsbeispiel ist die Beschichtung auf einer der beiden Seitenflächen angeordnet. Es kann aber auch vorgesehen sein, die Beschichtung beispielsweise mit halber Dicke beidseitig anzuordnen.

Fig. 4c zeigt ein drittes Ausführungsbeispiel zeigt Statorbleche 21 sb konstanter Dicke, die an ihrem äußeren radialen Endabschnitt Oberflächenerhebungen 21 se aufweisen und ein Statorblech bilden, an dessen radialen Querschnitt keilförmig zulaufende Tangenten anlegbar sind. Diese Tangenten sind unter dem Keilwinkel α zueinander geneigt. Die Oberflächenerhebungen 21 se können beispielsweise durch eine lokale Verformung des Statorblechs 21 sb ausgebildet sein. In dem in Fig. 4b dargestellten Ausführungsbeispiel handelt es sich um noppenförmige Erhebungen 21 se. Damit die Statorbleche 21 sb unter Ausbildung eines Keilwinkels aneinander liegen, sind benachbarte Statorbleche 21 sb jeweils um 180° gedreht montiert, so dass entweder die Noppen aufeinanderliegen oder die Rückseiten der Statorbleche, die im Bereich der Noppen eine rückseitige Vertiefung aufweisen. Es kann vorgesehen sein, die bei diesem Ausführungsbeispiel ausgebildeten Abstandsräume zwischen den Statorblechen nach der Montage der Statorelementsegmente 21 s durch einen Tauchlack auszufüllen.

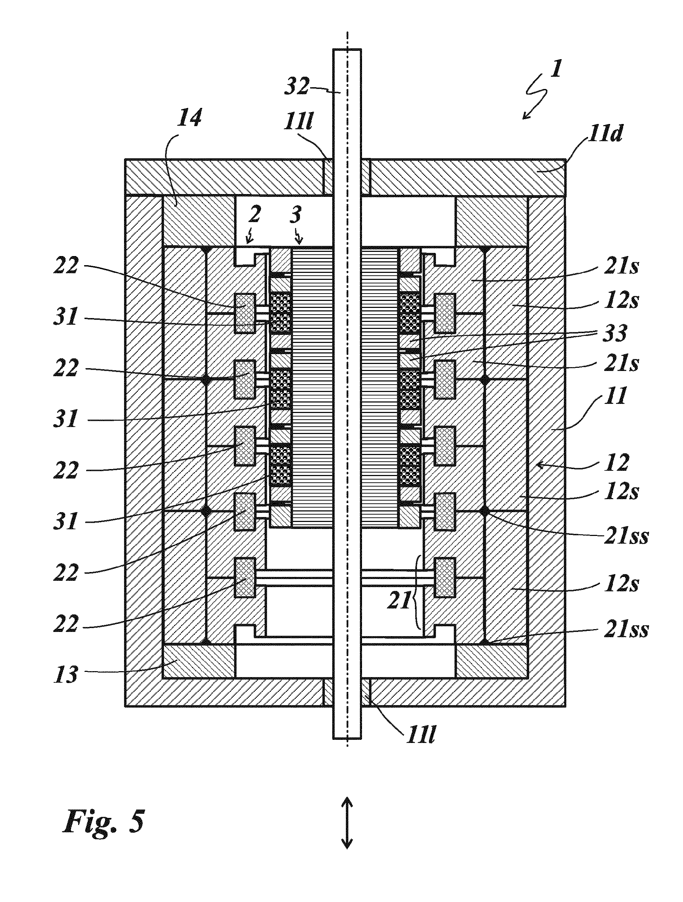

Fig. 5 zeigt ein zweites Ausführungsbeispiel des Longitudinalfluss-Linearmotors, das wie das in Fig. 1 beschriebene Ausführungsbeispiel ausgebildet ist, mit dem Unterschied, dass die Statorelementsegmente 21 s stoffschlüssig - hier durch Schweißnähte 21 ss - mit den Gehäusesegmenten 12s verbunden sind. Die Schweißnähte 21 ss sind zwischen der Außenfläche der Statorelementsegmente 21 s und der Innenseite der Gehäusesegmente 12s ausgebildet. Von Vorteil bei dieser Ausführung ist, dass die Herstellung der Statorelementsegmente 21 s und der Gehäusesegmente 21 s wegen Verzicht auf den Schwalbenschwanz vereinfacht ist. Von Nachteil ist, dass die Reparatur des Linearmotors, beispielsweise bei einem Wicklungsdefekt, gegenüber der in Fig. 1 dargestellten Ausführung erschwert ist.

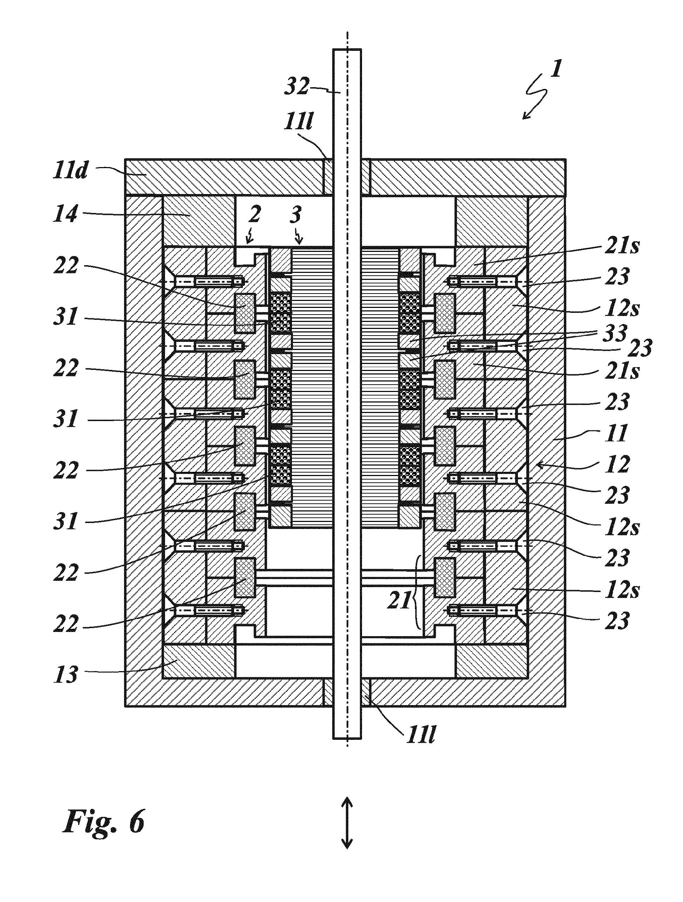

Fig. 6 zeigt ein drittes Ausführungsbeispiel, das die Vorteile der beiden vorstehend in Fig. 1 und 5 beschriebenen Ausführungsbeispiele miteinander verbindet. Der Longitudinalfluss-Linearmotor 1 ist wie der in Fig. 5 beschriebene Linearmotor ausgebildet, mit dem Unterschied, dass die Statorelementsegmente 21 s mit den Gehäusesegmenten 21 s durch Befestigungsschrauben 23 lösbar miteinander verbunden sind. Die Befestigungsschrauben 23 können beispielsweise als Senkschrauben ausgebildet sein, die die Gehäusesegmente 21 s durchgreifen und in Gewindesacklöcher der Statorelementsegmente 21 s eingreifen.

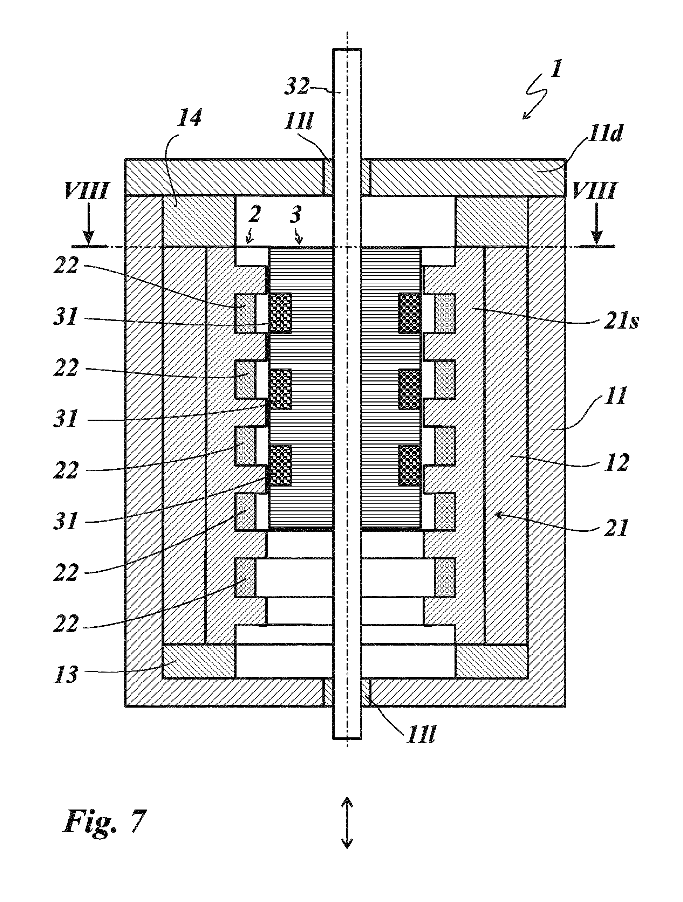

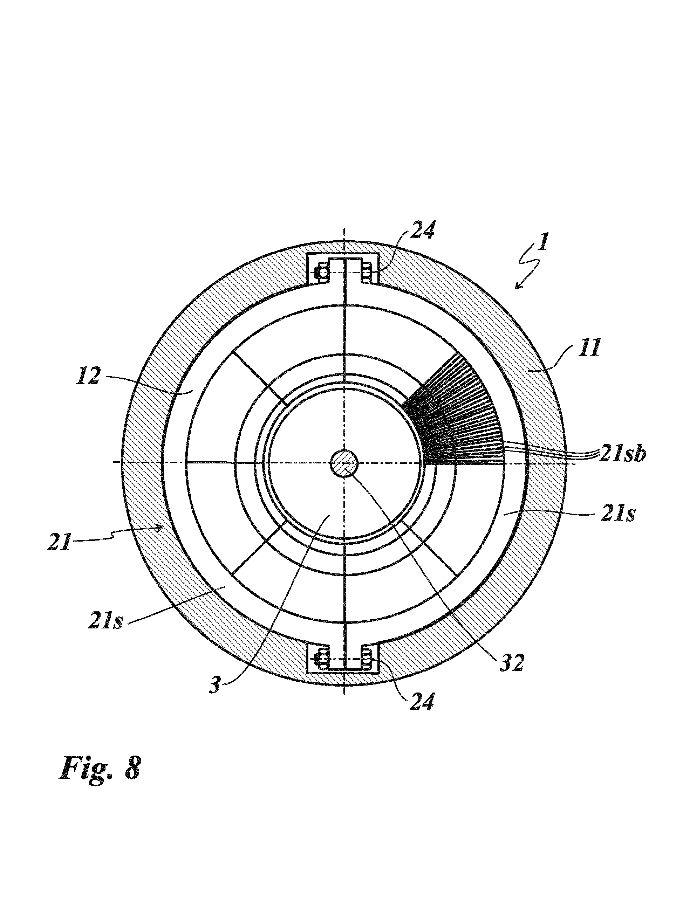

Die Fig. 7 und 8 zeigen ein viertes Ausführungsbeispiel des Longitudinalfluss-Linearmotors, bei dem das Statorelement 21 nur einen Ring von Statorelementsegmenten 21 s aufweist, der sämtliche Statorwicklungen 22 aufnimmt. In diesem Ausführungsbeispiel sind die Statorbleche 21 sb kraftschlüssig miteinander verbunden, wobei die Statorbleche 21 sb unter Presssitz an der Innenseite des Gehäuses 12 anliegen. Der Gehäuse 12 umfasst zwei schalenförmige Gehäusesegmente 12s, die durch Spannschrauben 24 zusammengepresst werden. Dadurch ergibt sich ein Aufbau nach dem Prinzip eines aus Dauben und Fassreifen aufgebauten Fasses oder eines Gewölbes, wobei die Statorbleche 21 sb die Dauben bilden und die beiden durch die Spannschrauben 24 zusammengepressten Gehäusesegmente 12s die Fassreifen bilden.

**Bezugszeichenliste**

| | |
|---|---|
| 1 | Longitudinalfluss-Linearmotor |
| 2 | Stator |
| 3 | Läufer |
| 11 | Außengehäuse |
| 11l | Gleitlager |
| 11d | Deckplatte |
| 12 | Gehäuse |
| 12s | Gehäusesegment |
| 12sf | Feder |
| 13 | unterer Abstandshalter |
| 14 | oberer Abstandshalter |
| 21 | Statorelement |
| 21n | Nut |
| 21s | Statorelementsegment |
| 21sa | Ausnehmung |
| 21sb | Statorblech |
| 21se | Erhebung |
| 21sl | Lackschicht |
| 21ss | Schweißnaht |
| 22 | Statorwicklung |
| 23 | Befestigungsschraube |
| 24 | Spannschraube |
| 31 | Permanentmagnet |
| 32 | Läuferachse |
| 33 | Flussleitelement |

## Patentansprüche

1. Elektrischer Longitudinalfluss-Linearmotor (1) mit einem Stator (2) und einem Läufer (3) mit Permanentmagneten (31), wobei der Stator (2) elektrisch beaufschlagbare Statorwicklungen (22) aufweist, die eine Läuferachse (32) des Läufers (3) umgreifen, wobei der magnetische Fluss in Ebenen parallel zur Läuferachse (32) ausgebildet ist, mit einem Außengehäuse (11), in dem ein Gehäuse (12) angeordnet ist,
wobei der Stator (2) aus elektrisch voneinander isolierten Statorblechen (21 sb) aufgebaut ist, die mit einander zugewandten Flächen in Ebenen angeordnet sind, die durch die Läuferachse und einen Radialvektor aufgespannt sind und ein Statorelement (21) oder mehrere längs der Läuferachse angeordnete Statorelemente (21) bilden,
wobei das Statorelement (21) aus mehreren längs der Läuferachse angeordneten und spiegelbildlich zueinander ausgebildeten Statorsegmentelementen (21 s) ausgebildet ist,
wobei die Statorbleche (21 sb) an ihrer dem Läufer (3) abgewandten Außenkante von dem aus Vollmaterial ausgebildeten Gehäuse (12) umgriffen sind, das aus mehreren längs und/oder parallel der Läuferachse angeordneten Gehäusesegmenten (12s) ausgebildet ist.

2. Longitudinalfluss-Linearmotor nach Anspruch 1,
**dadurch gekennzeichnet,**
**dass** die Statorelemente (21) Aufnahmeräume für die Statorwicklungen (22) aufweisen.

3. Longitudinalfluss-Linearmotor nach Anspruch 2,
**dadurch gekennzeichnet,**
**dass** die Aufnahmeräume als ringförmige Aufnahmeräume ausgebildet sind.

4. Longitudinalfluss-Linearmotor nach einem der vorangehenden Ansprüche,
**dadurch gekennzeichnet,**
**dass** die Statorbleche (21 sb) an ihrer dem Läufer (3) abgewandten Außenkante formschlüssig mit dem Gehäuse (12) verbunden sind.

5. Longitudinalfluss-Linearmotor nach einem der vorangehenden Ansprüche,
**dadurch gekennzeichnet,**
**dass** das Gehäusesegment (12) an seiner Innenfläche eine im Querschnitt schwalbenschwanzförmige Feder aufweist, die in eine an der Außenfläche des Statorelements (21) ausgebildete schwalbenschwanzförmige Nut eingreift oder umgekehrt.

6. Longitudinalfluss-Linearmotor nach einem der Ansprüche 1 bis 3,
**dadurch gekennzeichnet,**
**dass** die Statorbleche (21 sb) an ihrer dem Läufer (3) abgewandten Außenkante stoffschlüssig mit dem Gehäuse (12) verbunden sind.

7. Longitudinalfluss-Linearmotor nach einem der vorangehenden Ansprüche,
**dadurch gekennzeichnet,**
**dass** die Statorbleche (21 sb) an ihrer dem Läufer (3) abgewandten Außenkante stoffschlüssig miteinander verbunden sind.

8. Longitudinalfluss-Linearmotor nach einem der vorangehenden Ansprüche,
**dadurch gekennzeichnet,**
**dass** die Statorbleche (21 sb) im radialen Querschnitt keilförmig ausgebildet sind.

9. Longitudinalfluss-Linearmotor nach Anspruch 8,
**dadurch gekennzeichnet,**
**dass** Statorbleche (21 sb) mit konstanter Dicke in einem radialen Endabschnitt Oberflächenerhebungen aufweisen und so ein Statorblech bilden, an dessen Oberfläche keilförmig zulaufende Tangenten anlegbar sind.

10. Longitudinalfluss-Linearmotor nach Anspruch 8,
**dadurch gekennzeichnet,**
**dass** Statorbleche (21 sb) mit konstanter Dicke eine keilförmige Oberflächenbeschichtung aufweisen.

11. Longitudinalfluss-Linearmotor nach einem der Ansprüche 8 bis 10,
**dadurch gekennzeichnet,**
**dass** die Statorbleche (21 sb) kraftschlüssig miteinander verbunden sind, indem die Statorbleche (21 sb) unter Presssitz an der Innenseite des Gehäuses (12) anliegen.
